# EUROPEAN PATENT SPECIFICATION

(11) **EP 2 650 673 B1**
(45) Date of publication and mention of the grant of the patent: **02.03.2022**
(21) Application number: 11847725.6
(22) Date of filing: 29.11.2011
(51) Int. Cl.: G01N 21/82, G01N 35/00, G01N 21/25, G01N 21/51, G01N 21/59, G01N 35/02

(54) **AUTOMATIC ANALYTICAL APPARATUS**
AUTOMATISCHE ANALYSEVORRICHTUNG
APPAREIL AUTOMATIQUE D'ANALYSE

(30) Priority: 08.12.2010 JP 2010273437
(43) Date of publication of application: 16.10.2013
(73) Proprietor: Hitachi High-Tech Corporation, Minato-ku Tokyo 105-6409 (JP)
(72) Inventor: SHIBA Masaki, Chiyoda-ku, Tokyo 100-8280 (JP); ANDO Manabu, Hitachinaka-shi Ibaraki 312-8504 (JP)
(74) Representative: Mewburn Ellis LLP
(86) International application number: PCT/JP2011/077525
(87) International publication number: WO 2012/077536

(56) References cited:
- GB-A- 1 326 041
- JP-A- 10 332 582
- JP-A- 2001 141 654
- JP-A- 2002 181 725
- JP-A- 2006 125 953
- JP-A- 2007 519 906
- JP-A- 2008 008 794
- JP-A- 2008 216 054
- JP-A- 2009 092 600
- US-A- 5 719 665
- US-A1- 2009 059 218
- US-A1- 2009 185 188
- US-B1- 6 750 063

## Description

### Technical Field

The present invention relates to an automatic analyzer that qualitatively and quantitatively analyzes biological samples such as serum and urine.

### Background Art

In a biochemical analysis or immunoassay, an automatic analyzer is often used to examine samples (e.g., blood, urine, or other biological samples to which reagents are often added).

To analyze samples, a biochemical analysis examines color reactions between substrates and enzymes while an immunoassay examines agglutination reactions between antigens and antibodies. To examine such color reactions and agglutination reactions, an automatic analyzer causes a light source to emit light onto a reaction vessel containing a sample-reagent mix and then measures the intensities of transmissive light through and/or scattered light from the reaction vessel.

An example of an automatic analyzer that measures scattered light intensity is the one disclosed in Patent Document 1. In this analyzer, two integrating spheres are disposed in front of and behind a reaction vessel with respect to the direction of light radiated onto the vessel. The analyzer calculates the average of the intensities of light scattered forward and light scattered backward, thereby correcting turbidity changes attributed to cell displacement. Also, Patent Documents 2 and 3 each disclose an automatic analyzer that uses a diaphragm to separate incident light into transmissive light and scattered light, thereby simultaneously measuring the absorbance and scattered light.

### Prior Art Documents

### Patent Documents

Patent Document 1: JP-1998-332582-A
Patent Document 2: JP-2001-141654-A
Patent Document 3: JP-2008-8794-A

Patent document US 2009/0059218 A1 describes a turbidity measurement device comprising a light source 35, a sample holder and a nephelometer detector 37 angled at 90° from the input light 34 and detecting scattered light 36. This document describes also a turbidity calibration standard comprising a number from 1 to 5 different calibration samples contained in container 11 and a method to use this calibration standard for adjusting, if necessary, the light intensity of the source or the sensitivity of the detector. Summary of the Invention Problems to be Solved by the Invention

In a conventional method of detecting the concentration of a substance in a sample, light is radiated onto the sample mixed with a reagent, and the intensity of the transmissive light that has passed through the sample-reagent mix is measured and converted into the concentration of the substance (the absorbance method). In another conventional method, the scattered light generated from the sample is instead measured and converted into the concentration of the substance. When either of the two methods is employed, the measured intensity of the light radiated onto the sample and the measured intensity of the transmissive light or scattered light need to fall within a given range. In the absorbance method, the intensity of the light source and the sensitivity of the transmissive-light receiver are corrected based on the assumption that the intensity of the light source is equal to the intensity of transmissive light passing through water (zero absorbance) contained within a reaction vessel. Thus, the absorbance method allows simultaneous examination of the light intensity of the light source and baseline transmissive-light intensity.

The latter method of using scattered light, however, has drawbacks. When a reaction vessel contains a substance with no scatterers, scattered light intensity is ideally measured to be zero. However, a small amount of scattered light is often detected because the reaction vessel scatters a small amount of incident light. In addition, because scattered light intensity is strongly proportional to incident light intensity, baseline scattered-light intensity cannot be determined unless the incident light intensity is not accurately determined. Thus, the method of using scattered light involves difficulty in examining the baseline scattered-light intensity, which in turn causes analysis results to vary from analyzer to analyzer.

The present invention has been contrived to address the above issues, and an object of the invention is to provide an automatic analyzer capable of correcting the intensity of light incident on a reaction vessel even when an analysis involves the use of scattered light and also capable of preventing analysis results obtained by the analyzer from differing from those obtained by another analyzer due to inaccurate measurement of the incident light.

### Means for Solving the Problems

To solve the above problems, an automatic analyzer according to an aspect of the invention is set out in claim 1.

### Effect of the Invention

In accordance with the present invention, the intensity of light incident on a reaction vessel can be corrected even when an analysis involves the use of scattered light, and analysis results obtained by the analyzer are prevented from differing from those obtained by another analyzer due to inaccurate measurement of the incident light.

### Brief Description of the Drawings

FIG. 1 illustrates the overall configuration of an automatic analyzer according to an embodiment of the invention.
FIG. 2 illustrates the configuration of a measurement unit and how it performs measurement.
FIG. 3 illustrates the relationships between the intensities of transmissive light and scattered light measured by the measurement unit and the concentration of scatterers in a substance contained within a reaction vessel.
FIG. 4 is a flowchart illustrating the correction performed by the analyzer.

### Mode for Carrying Out the Invention

An embodiment of the present invention will now be described with reference to the accompanying drawings.

### (1) Configuration of the automatic analyzer

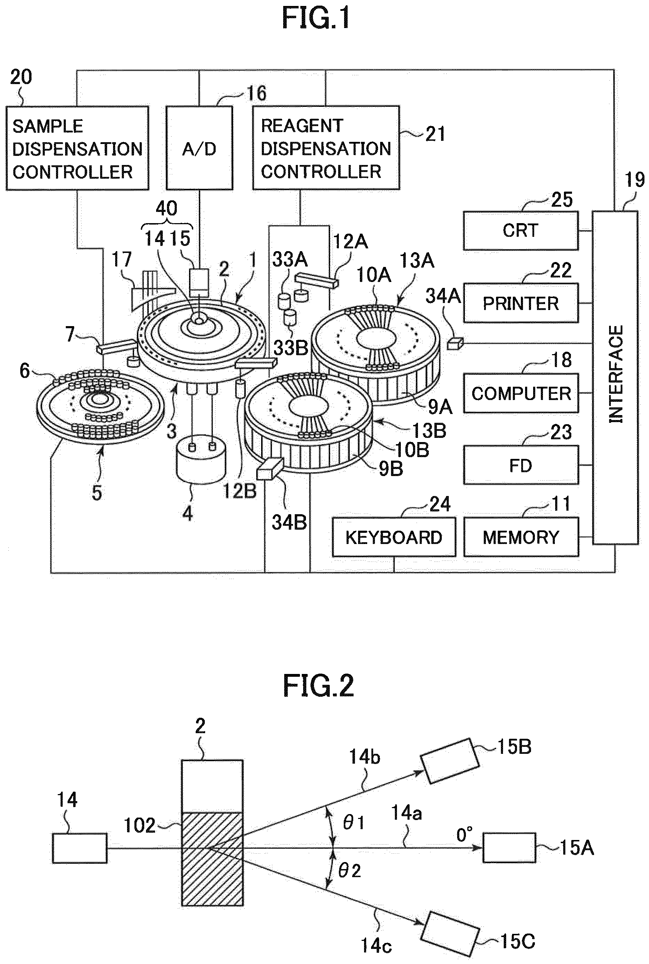

FIG. 1 illustrates the overall configuration of an automatic analyzer according to an embodiment of the invention.

As illustrated in FIG. 1, the analyzer includes a sample disk 5, a first reagent disk 13A, a second reagent disk 13B, and a reaction disk 1, all capable of rotating intermittently. The analyzer further includes the following components: a sample dispenser 7; two reagent dispensers 12A and 12B; a measurement unit 40 for performing measurement on sample-reagent mixes; a computer 18 for controlling the operation of the analyzer; and other functional units.

Arranged along the circumference of the sample disk 5 are multiple sample vessels 6 each containing a sample (e.g., a biological sample such as serum and urine). A rotating mechanism (not illustrated) allows the sample disk 1 to rotate laterally and stop at a particular position.

The first reagent disk 13A and the second reagent disk 13B are housed within reagent refrigerators 9A and 9B, respectively. Arranged and fixed along the circumferences of the reagents disks 13A and 13B are multiple reagent bottles 10A and 10B, respectively, which are used for particular analyses. With rotating mechanisms not illustrated, the first reagent disk 13A and the second reagent disk 13B are allowed to rotate laterally and stop at particular positions. Reading devices 34A and 34B are also disposed adjacent to the first reagent disk 13A and the second reagent disk 13B so that the reagent IDs of the reagent bottles 10A and 10B can be read. Reagent IDs read and their associated bottle positions on the reagent disks 13A and 13B are transmitted through an interface 19 to the computer 18 and then stored on a memory 11. Reagent IDs can take the form of barcodes; in that case, the reading devices 34A and 34B are barcode readers. It should be noted that a first standard reagent and a second standard reagent are placed on the reagent disks 13A and 13B, respectively. These standard reagents are used to perform correction on the measurement unit 40 (discussed later).

The reaction disk 1 is housed within a thermostat tank 3 that is temperature-controlled by a thermostat 4 (the temperature within the thermostat tank 3 is maintained at 37 degrees Celsius, for example). Arranged and fixed along the circumference of the reaction disk 1 are multiple reaction vessels 2 in which to mix a sample and a reagent. A rotating mechanism (not illustrated) allows the reaction disk 1 to rotate laterally and stop at particular positions. The rotation of the reaction disk 1 causes a reaction vessel 2 to move to sample and reagent dispensing positions. At the sample dispensing position, the sample dispenser 7 dispenses a sample into the reaction vessel 2, and at one of the reagent dispensing positions of the first and second reagent disks 13A and 13B, the reagent dispenser 12A or 12B dispenses the reagent required for a particular analysis into the reaction vessel 2. The sample and reagent dispensation is followed by the stirring of the sample-reagent mix by a stirring mechanism 33A or 33B. The operation of the sample dispenser 7 is controlled by a sample dispensation controller 20 while the operation of the reagent dispensers 12A and 12B is controlled by a reagent dispensation controller 21.

The measurement unit 40 is located adjacent to the reaction disk 1 and designed to perform measurement on the sample-reagent mix contained within any reaction vessel 2. As discussed later in detail, the measurement unit 40 includes a light source 14 for radiating light onto a reaction vessel 2 (e.g., a LED: Light Emitting Diode) and a photometric instrument 15 for detecting the transmissive light through and the scattered light from the reaction vessel 2. Measurement is performed on the reaction vessel 2 while the rotation of the reaction disk 1 causes it to traverse the area located between the light source 14 and the photometric instrument 15. The measurement results obtained by the photometric instrument 15 (i.e., analog signals) are converted by an A/D converter 16 into digital signals, which are then transmitted to the computer 18 through the interface 19.

Reaction vessels 2 that have been subjected to measurement are cleaned at the rinse position with the use of a rinse mechanism 17.

The analyzer further includes a keyboard 24, a CRT display 25, a printer 22, and a storage medium drive 23 for recording data on FDs or other external storage media. These devices and the memory 11 are connected to the computer 18 and other functional units through the interface 19. The memory 11 is a data storage device such as a hard disk and used to store analysis results, operator passwords, display settings, analysis parameters, information on requested analysis, calibration results, and so forth.

Next described is the measurement performed by the analyzer of the present embodiment.

FIG. 2 illustrates the configuration of the measurement unit 40 and how it performs measurement. Note that the reaction vessel 2 of FIG. 2 contains a substance 102.

As shown in FIG. 2, the measurement unit 40 includes the light source 14 and the photometric instrument 15. As illustrated in FIG. 2, this photometric instrument 15 comprises a transmissive-light receiver 15A and two scattered-light receivers 15B and 15C (note that a single scattered-light receiver, 15B or 15C, will also do). The transmissive-light receiver 15A is located across from the light source 14 with the reaction vessel 2 placed therebetween and measures the intensity of the transmissive light passing through the reaction vessel 2 (also through the substance 102). The scattered-light receivers 15B and 15C are located on the side of the transmissive-light receiver 15A and measure the light scattered from the reaction vessel 2. These light receivers 15A, 15B, and 15C can be photodiodes, PMT (photomultiplier tubes), or the like.

The transmissive-light receiver 15A is disposed on the axis of the light emitted from the light source 14 to the reaction vessel 2 and detects the transmissive light 14a that passes through the reaction vessel 2 along the light axis. The scattered-light receiver 15B is disposed at a predetermined angle θ1 with respect to the light axis, with the vertex lying within the reaction vessel 2, and detects the scattered light 14b generated from the reaction vessel 2.

While the light source 14 is meant to be an LED (i.e., a single-wavelength light source), it can instead be a multi-wavelength light source that is capable of changing the wavelength of light. In that case, a multi-wavelength photometer is used as the transmissive-light receiver 15A.

Further, while FIG. 2 illustrates a case where the scattered-light receiver 15B is disposed above the transmissive-light receiver 15A, at the angle θ1 with respect to the light axis, its installation position is not limited thereto. It can instead be disposed to the right or left of the transmissive-light receiver 15A or obliquely with respect to the transmissive-light receiver 15A. The scattered-light receiver 15C is also disposed in a manner similar to the scattered-light receiver 15B. More specifically, the scattered-light receiver 15C is disposed at a predetermined angle θ2 with respect to the light axis of the measured light radiated from the light source 14 to the reaction vessel 2, with the vertex lying within the reaction vessel 2, and detects the scattered light 14c generated from the reaction vessel 2.

By the thus-configured measurement unit 40 measuring the intensities of the transmissive light and the scattered light, the concentration of scatterers in the substance 102 (a sample-reagent mix) within the reaction vessel 2 can be measured.

### (2) Principles of calculating the concentration of scatterers

We now describe how to calculate the concentration of scatterers in the substance 102 based on the intensities of transmissive light and scattered light measured by the measurement unit 40. In the present embodiment, those light intensities are converted into concentration data based on calibration curves. Such calibration curves are created in advance according to particular analysis methods.

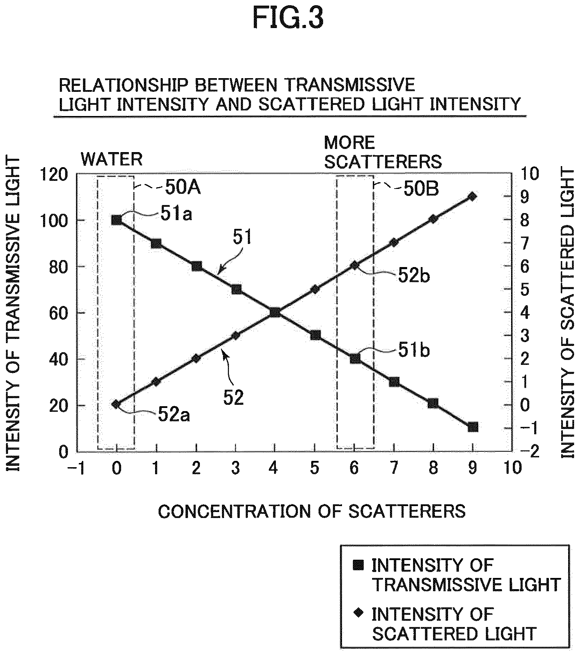

FIG. 3 illustrates the relationships between the intensities of transmissive light and scattered light measured by the measurement unit 40 and the concentration of scatterers in the substance 102 within the reaction vessel 2. In FIG. 3, the left vertical axis represents the intensity of transmissive light, the right vertical axis represents the intensity of scattered light, and the bottom horizontal axis represents the concentration of scatterers. In addition, the solid line 51 denotes the relationship between the intensity of transmissive light and the concentration of scatterers while the solid line 52 denotes the relationship between the intensity of scattered light and the concentration of scatterers.

The following should also be noted. In FIG. 3, the left vertical axis represents the ratio of the intensity of transmissive light to the intensity of light radiated toward the reaction vessel 2; more specifically, it represents the percentage of the intensity of transmissive light measured by the transmissive-light receiver 15A to the intensity of light emitted from the light source 14. In addition, the right vertical axis represents the intensity of scattered light that has been standardized, that is, the values obtained by standardizing, according to a particular principle, the intensity values detected by the scattered-light receivers 15B and 15C. Similar to the right vertical axis, the bottom horizontal axis represents the concentration of scatterers that has been standardized, that is, the values obtained by standardizing detection results according to a particular principle.

As illustrated in the area 50A of FIG. 3, when the concentration of scatterers in the substance 102 is zero (e.g., when the reaction vessel 2 contains water which has no scatterers), the transmissive light intensity is 100 (see the point 51a on the solid line 51 representing the relationships between the intensities of transmissive light and scattered light), and the scattered light intensity is zero (see the point 52a on the solid line 52 representing the relationships between the intensities of transmissive light and scattered light). If the concentration of scatterers in the substance 102 increases from zero, the scattered light intensity increases, and the transmissive light intensity decreases (note however that all decrease in the intensity of transmissive light is not necessarily detected as the intensity of scattered light because some portion of the transmissive light is absorbed within the substance 102). As illustrated in the area 50B of FIG. 3, when the concentration of scatterers in the substance 102 is 6 (i.e., when the reaction vessel 2 contains a substance whose scatterer concentration is 6), the transmissive light intensity is 40 (see the point 51b on the solid line 51 representing the relationships between the intensities of transmissive light and scattered light), and the scattered light intensity is 6 (see the point 52b on the solid line 52 representing the relationships between the intensities of transmissive light and scattered light).

In the measurement according to the present embodiment, the intensity of transmissive light is calculated from the detection results obtained by the transmissive-light receiver 15A, and the intensity of scattered light is calculated from the detection results obtained by the scattered-light receivers 15B and 15C. These intensities of transmissive light and scattered light are then used to calculate the concentration of scatterers based on the relationships illustrated in FIG. 3.

### (3) Correction (correction of the light intensity of the light source and correction of the sensitivity of the light receivers)

Discussed next is the correction performed by the analyzer of the present embodiment. The correction refers to the act of correcting the light intensity of the light source 14 of the measurement unit 40 and the sensitivity of the transmissive-light receiver 15A and the scattered-light receivers 15B and 15C before the start of an analysis.

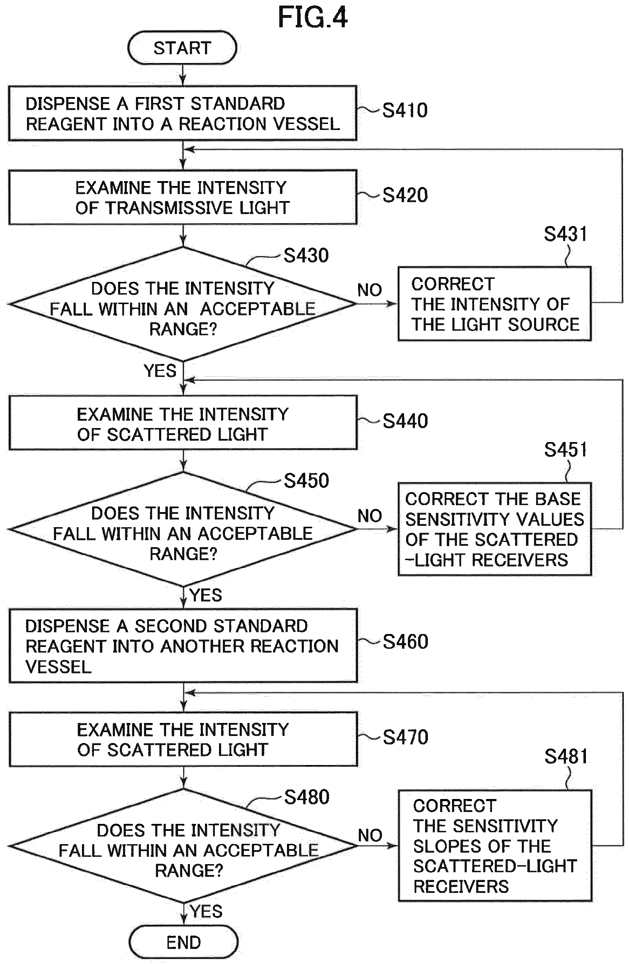

FIG. 4 is a flowchart illustrating the correction in the present embodiment.

The reagent dispenser 12A or 12B first dispenses the first standard reagent into a reaction vessel 2 as instructed by the computer 18 for controlling whole operations (Step S410). The first standard reagent is one with known transmissive and scattering properties and can be, for example, water or other substance that has less influence on light passing through it (i.e., a substance that allows the passage of light and causes less light scattering). The measurement unit 40 then measures the intensity of transmissive light passing through the first standard reagent (Step S420). The measurement result of the reagent at this time would be in an area 50A of FIG. 3, and the transmissive light intensity measured would be the same as that shown by the point 51a of FIG. 3. Next, a judgment is made as to whether the transmissive light intensity measured falls within an acceptable range (Step S430). If not, the light intensity of the light source 14 is corrected so that the transmissive light intensity measured will fall within the acceptable range, that is, the difference between the transmissive light intensity measured and the middle value of the acceptable range can be eliminated (Step S431). Steps S420 and S431 are repeated until the transmissive light intensity measured falls within the range.

When the transmissive light intensity measured falls within the acceptable range in Step S430, then, the measurement unit 40 measures the intensity of scattered light generated from the first standard reagent (Step S440). The measurement result of the reagent at this time would be in an area 50A of FIG. 3, and the scattered light intensity measured would be the same as that shown by the point 52a of FIG. 3. Next, a judgment is made as to whether the scattered light intensity measured falls within an acceptable range (Step S450). If not, the base sensitivity values of the scattered-light receivers 15B and 15C are corrected so that the scattered light intensity measured will fall within the acceptable range, that is, the difference between the scattered light intensity measured and the middle value of the acceptable range can be eliminated (Step S431). Steps S440 and S451 are repeated until the scattered light intensity measured falls within the range.

When the scattered light intensity measured falls within the acceptable range in Step S450, then, the reagent dispenser 12B dispenses the second standard reagent into another empty reaction vessel 2 (Step S460). The second standard reagent is also one with known transmissive and scattering properties and can be, for example, a latex solution or a solution containing other standard scatterers. The measurement unit 40 then measures the intensity of scattered light generated from the second standard reagent (Step S470). The measurement result of the reagent at this time would be in an area 50B of FIG. 3, and the scattered light intensity measured would be close to that shown by the point 52b of FIG. 3. Next, a judgment is made as to whether the scattered light intensity measured falls within an acceptable range (Step S480). If not, the sensitivity slopes of the scattered-light receivers 15B and 15C are corrected so that the scattered light intensity measured will fall within the acceptable range, that is, the difference between the scattered light intensity measured and the middle value of the acceptable range can be eliminated (Step S481). Steps S470 and S481 are repeated until the scattered light intensity measured falls within the range. When the scattered light intensity measured falls within the acceptable range in Step S480, the correction is terminated.

It should be noted that the first and second standard reagents can be solid substances as long as their transmissive and scattering properties are known. For example, it is also possible to solidify such a substance within a reaction vessel 2 and place the solidified substance on the reaction disk 1. Alternatively, it is also possible to process such a substance into the shape of a reaction vessel 2 and place that substance on the reaction disk 1.

### (4) Operation

Described next is the operation of the automatic analyzer of the present embodiment.

Analysis parameters used for particular analyses are input in advance to the analyzer through the keyboard 24 and stored on the memory 11. The operator is supposed to select the patient IDs associated with the samples to be examined and the information on the requested analyses while viewing an operation function screen.

When the operator instructs the analyzer to start analysis, correction is first performed on an as-needed basis before the analysis.

During the correction, the reagent dispenser 12A or 12B first dispenses the first standard reagent into a reaction vessel 2 as instructed by the computer 18, followed by the measurement of the intensity of transmissive light by the measurement unit 40. The light intensity of the light source 14 is then corrected so that the transmissive light intensity measured falls within an acceptable range (Steps S410 through S431 of FIG. 4). Thereafter, the measurement unit 40 measures the intensity of scattered light to correct the base sensitivity values of the scattered-light receivers 15B and 15C so that the scattered light intensity measured falls within an acceptable range (Steps S440 through S451 of FIG. 4). The reagent dispenser 12A or 12B then dispenses the second standard reagent into another reaction vessel 2, followed by the measurement of the intensity of scattered light by the measurement unit 40. Next, the sensitivity slopes of the scattered-light receivers 15B and 15C are corrected so that the scattered light intensity measured falls within an acceptable range (Steps S460 through S481 of FIG. 4), which is followed by the termination of the correction.

During analyses, the sample dispenser 7 first dispenses samples from sample vessels 6 to reaction vessels 2 as needed for the analyses, and the reagent dispensers 12A and 12B then dispense the required reagents into the reaction vessels 2. Thereafter, the sample-reagent mixes within the reaction vessels 2 are stirred by the stirring mechanisms 33A and 33B. When the rotation of the reaction disk 1 causes each of the reaction vessels 2 to move past the measurement unit 40 (measurement position), the measurement unit 40 measures the intensities of transmissive light and scattered light. The measured light intensities are converted by the A/D converter 16 into digital signals, which are then transmitted to the computer 18 through the interface 19. After receiving the digital signals, the computer 18 converts them into concentration data based on the calibration curves created in advance according to particular analysis methods. The concentration data obtained is output to the printer 22 or to the CRT display 25.

### (5) Advantages

Next described are the advantages of the automatic analyzer of the present embodiment.

In a conventional method of detecting the concentration of a substance in a sample, light is radiated onto the sample mixed with a reagent, and the intensity of the transmissive light that has passed through the sample-reagent mix is measured and converted into the concentration of the substance (the absorbance method). In another conventional method, the scattered light generated from the sample is instead measured and converted into the concentration of the substance. When either of the two methods is employed, the measured intensity of the light radiated onto the sample and the measured intensity of the transmissive light or scattered light need to fall within a given range. In the absorbance method, the intensity of the light source and the sensitivity of the transmissive-light receiver are corrected based on the assumption that the intensity of the light source is equal to the intensity of transmissive light passing through water (zero absorbance) contained within a reaction vessel. Thus, the absorbance method allows simultaneous examination of the light intensity of the light source and baseline transmissive-light intensity. The latter method of using scattered light, however, has drawbacks. When a reaction vessel contains a substance with no scatterers, scattered light intensity is ideally measured to be zero. However, a small amount of scattered light is often detected because the reaction vessel scatters a small amount of incident light. In addition, because scattered light intensity is strongly proportional to incident light intensity, baseline scattered-light intensity cannot be determined unless the incident light intensity is not accurately determined. Thus, the method of using scattered light involves difficulty in examining the baseline scattered-light intensity, which in turn causes analysis results to vary from analyzer to analyzer.

In contrast, the analyzer of the present embodiment comprises a light source for radiating light onto a reaction vessel in which a sample is caused to react with a reagent; a transmissive-light receiver, located across from the light source with the reaction vessel placed therebetween, for measuring the intensity of transmissive light passing through the reaction vessel; at least one scattered-light receiver, located on the side of the transmissive-light receiver, for measuring the intensity of light scattered from the reaction vessel; and light-intensity correcting means for correcting the light intensity of the light source based on measurement results obtained by the transmissive-light receiver. Thus, the above analyzer is capable of correcting the intensity of the light incident on the reaction vessel even when an analysis involves the use of scattered light. The use of such analyzers prevents analysis results from varying from analyzer to analyzer due to inaccurate measurement of the incident light.

It should also be noted that when multiple scattered-light receivers are used as in the above embodiment, the angles (θ1, θ2, etc.) of at least two of them with respect to the axis of light radiated onto a reaction vessel can be the same. In that case, when those scattered-light receivers detect different scattered light intensities, they are judged to be displaced, followed by the correction of their positions. This is possible because, in principle, scattered-light receivers disposed at the same angle are supposed to detect the same scattered-light intensity.

### Description of Reference Symbols

- 1:: Reaction disk
- 2:: Reaction vessel
- 3:: Thermostat tank
- 4:: Thermostat
- 5:: Sample disk
- 6:: Sample vessel
- 7:: Sample dispenser
- 8:: Pipette nozzle
- 9A, 9B:: Reagent refrigerator
- 10A, 10B:: Reagent bottle
- 11:: Memory
- 12A, 12B:: Reagent dispenser
- 13A, 13B:: Reagent disk
- 14:: Light source
- 15:: Photometric instrument
- 16:: A/D converter
- 18:: Computer
- 19:: Interface
- 20:: Sample dispensation controller
- 21:: Reagent dispensation controller
- 22:: Printer
- 23:: FD
- 24:: Keyboard
- 25:: CRT display
- 33A, 33B:: Stirring mechanism
- 34A, 34B:: Reading device
- 40:: Measurement unit

## Claims

1. An automatic analyzer for analysing a sample by measuring intensities of transmissive light through and scattered light from a mixture of the sample and a reagent in a reaction vessel, the automatic analyzer comprising:
a light source (14) for radiating light onto the reaction vessel (2) in which the sample is caused to react with the reagent;
a transmissive-light receiver (15A), located across from the light source (14) with the reaction vessel (2) placed therebetween, on the axis of the light emitted from the light source (14), for measuring the intensity of transmissive light passing through the reaction vessel (2); and
at least one scattered-light receiver (15B, 15C), located on the side of the transmissive-light receiver (15A) at a predetermined angle with respect to the light axis, , for measuring the intensity of light scattered from the reaction vessel (2);
wherein the automatic analyzer is configured to:
dispense a first standard reagent into an empty reaction vessel (2), wherein the first standard reagent has known transmissive and scattering properties;
measure the intensity of transmissive light passing through the first standard reagent;
judge whether the measured transmissive light intensity falls within an acceptable range;
if the measured transmissive light intensity is judged not to fall within the acceptable range, correct the light intensity of the light source (14) so that the measured transmissive light intensity falls within the acceptable range;
when the measured transmissive light intensity falls within the acceptable range, measure the intensity of scattered light generated from the first standard reagent;
judge whether the measured scattered light intensity falls within an acceptable range;
if the measured scattered light intensity is judged not to fall within the acceptable range, correct the base sensitivity of the at least one scattered-light receiver so that the measured scattered light intensity falls within the acceptable range;
when the measured scattered light intensity falls within the acceptable range, dispense a second standard reagent into another empty reaction vessel (2), wherein the second standard reagent has known transmissive and scattering properties;
measure the intensity of scattered light generated from the second standard reagent;
judge whether the measured scattered light intensity falls within an acceptable range;
if the measured scattered light intensity is judged not to fall within the acceptable range, correct the sensitivity slope of the at least one scattered-light receiver so that the measured scattered light intensity falls within the acceptable range.

2. The automatic analyzer of claim 1, wherein the at least one scattered-light receiver (15B, 15C) is arranged in the form of a ring around the axis of the light radiated from the light source (14) .

## Patentansprüche

1. Automatische Analysevorrichtung zum Analysieren einer Probe durch Messen der Intensitäten von Transmissionslicht durch und Streulicht von ein(em) Gemisch der Probe und eines Reagens in einem Reaktionsgefäß, wobei die automatische Analysevorrichtung Folgendes umfasst:
eine Lichtquelle (14) zum Aussenden von Licht auf das Reaktionsgefäß (2), in dem bewirkt wird, dass die Probe mit dem Reagens reagiert;
einen Transmissionslichtempfänger (15A), der auf der Achse des von der Lichtquelle (14) emittierten Lichts gegenüber der Lichtquelle (14) angeordnet ist, wobei das Reaktionsgefäß (2) dazwischen angeordnet ist, zum Messen der Intensität von Transmissionslicht, das durch das Reaktionsgefäß (2) hindurchtritt; und
zumindest einen Streulichtempfänger (15B, 15C), der auf der Seite des Transmissionslichtempfängers (15A) in einem vorbestimmten Winkel in Bezug auf die Lichtachse angeordnet ist, zum Messen der Intensität von Licht, das vom Reaktionsgefäß (2) gestreut wird;
wobei die automatische Analysevorrichtung ausgelegt ist, um:
ein erstes Standardreagens in ein leeres Reaktionsgefäß (2) abzugeben, wobei das erste Standardreagens bekannte Transmissions- und Streuungseigenschaften aufweist;
die Intensität von Transmissionslicht, das durch das erste Standardreagens hindurchtritt, zu messen;
zu beurteilen, ob die gemessene Transmissionslichtintensität in einem annehmbaren Bereich fällt;
wenn befunden wird, dass die gemessene Transmissionslichtintensität nicht in den annehmbaren Bereich fällt, die Lichtintensität der Lichtquelle (14) so zu korrigieren, dass die gemessene Transmissionslichtintensität in den annehmbaren Bereich fällt;
wenn die gemessene Transmissionslichtintensität in den annehmbaren Bereich fällt, die Intensität von Streulicht, das vom ersten Standardreagens erzeugt wird, zu messen;
zu beurteilen, ob die gemessene Streulichtintensität in einen annehmbaren Bereich fällt;
wenn befunden wird, dass die gemessene Streulichtintensität nicht in den annehmbaren Bereich fällt, die Basisempfindlichkeit des zumindest einen Streulichtempfängers zu korrigieren, so dass die gemessene Streulichtintensität in den annehmbaren Bereich fällt;
wenn die gemessene Streulichtintensität in den annehmbaren Bereich fällt, ein zweites Standardreagens in ein weiteres leeres Reaktionsgefäß (2) abzugeben, wobei das zweite Standardreagens bekannte Transmissions- und Streuungseigenschaften aufweist;
die Intensität von Streulicht, das vom zweiten Standardreagens erzeugt wird, zu messen;
zu beurteilen, ob die gemessene Streulichtintensität in einen annehmbaren Bereich fällt;
wenn befunden wird, dass die gemessene Streulichtintensität nicht in den annehmbaren Bereich fällt, die Empfindlichkeitssteigung des zumindest einen Streulichtempfängers so zu korrigieren, dass die gemessene Streulichtintensität in den annehmbaren Bereich fällt.

2. Automatische Analysevorrichtung nach Anspruch 1, wobei der zumindest eine Streulichtempfänger (15B, 15C) in Form eines Ringes um die Achse des von der Lichtquelle (14) abgestrahlten Lichts angeordnet ist.

## Revendications

1. Analyseur automatique pour analyser un échantillon en mesurant des intensités de lumière transmise à travers et de lumière diffusée à partir d'un mélange de l'échantillon et d'un réactif dans un récipient de réaction, l'analyseur automatique comprenant :
une source de lumière (14) pour rayonner de la lumière jusque sur le récipient de réaction (2) dans lequel l'échantillon est amené à réagir avec le réactif ;
un récepteur de lumière transmise (15A), situé face à la source de lumière (14) avec le récipient de réaction (2) entre eux, sur l'axe de la lumière émise à partir de la source de lumière (14), pour mesurer l'intensité de lumière transmise passant à travers le récipient de réaction (2) ; et
au moins un récepteur de lumière diffusée (15B, 15C), situé sur le côté du récepteur de lumière transmise (15A) à un angle prédéterminé par rapport à l'axe de lumière, pour mesurer l'intensité de lumière diffusée à partir du récipient de réaction (2) ;
dans lequel l'analyseur automatique est configuré pour :
distribuer un premier réactif standard dans un récipient de réaction (2) vide, dans lequel le premier réactif standard a des propriétés de transmission et de diffusion connues ;
mesurer l'intensité de lumière transmise passant à travers le premier réactif standard ;
juger si l'intensité de lumière transmise mesurée se situe dans une plage acceptable ;
si l'intensité de lumière transmise mesurée est jugée comme ne se situant pas dans la plage acceptable, corriger l'intensité de lumière de la source de lumière (14) de sorte que l'intensité de lumière transmise mesurée se situe dans la plage acceptable ;
lorsque l'intensité de lumière transmise mesurée se situe dans la plage acceptable, mesurer l'intensité de lumière diffusée générée par le premier réactif standard ;
juger si l'intensité de lumière diffusée mesurée se situe dans une plage acceptable ;
si l'intensité de lumière diffusée mesurée est jugée comme ne se situant pas dans la plage acceptable, corriger la sensibilité de base du au moins un récepteur de lumière diffusée de sorte que l'intensité de lumière diffusée mesurée se situe dans la plage acceptable ;
lorsque l'intensité de lumière diffusée mesurée se situe dans la plage acceptable, distribuer un second réactif standard dans un autre récipient de réaction vide (2), dans lequel le second réactif standard a des propriétés de transmission et de diffusion connues ;
mesurer l'intensité de lumière diffusée générée par le second réactif standard ;
juger si l'intensité de lumière diffusée mesurée se situe dans une plage acceptable ;
si l'intensité de lumière diffusée mesurée est jugée comme ne se situant pas dans la plage acceptable, corriger la pente de sensibilité du au moins un récepteur de lumière diffusée de sorte que l'intensité de lumière diffusée mesurée se situe dans la plage acceptable.

2. Analyseur automatique selon la revendication 1, dans lequel le au moins un récepteur de lumière diffusée (15B, 15C) est agencé sous la forme d'un anneau autour de l'axe de la lumière rayonnée à partir de la source de lumière (14).
